# EUROPEAN PATENT APPLICATION

(11) **EP 3 656 614 A1**
(43) Date of publication of application: **27.05.2020**
(21) Application number: 18208203.2
(22) Date of filing: 26.11.2018
(51) Int. Cl.: B60R 13/10, G08G 1/00

(54) **SMART LICENSE PLATE AND TRAFFIC INFORMATION SYSTEM**

(71) Applicant: Alsuhaibani, Younes Suliman A., Riyadh (SA)
(72) Inventor: Alsuhaibani, Younes Suliman A., Riyadh (SA)
(74) Representative: Nederlandsch Octrooibureau

(57) **Abstract**

A smart license plate with an electronics unit (2), an antenna (3), an RF transmitter unit (4), a processing unit (5) and a memory unit (6). The processing unit (5) is arranged to compose a transmission message with vehicle related information stored in the memory unit (6), and to transmit the transmission message via the RF transmitter unit (4) in an asynchronous manner. Furthermore, the invention relates to a traffic information system with a plurality of receivers (17), each receiver (17) being arranged to receive transmissions from a smart license plate (1) when within receiving range of a respective one of the plurality of receivers (17).

## Description

### Field of the invention

The present invention relates to a smart license plate, comprising an electronics unit, the electronics unit comprising an antenna, an RF transmitter unit connected to the antenna, a processing unit connected to the RF transmitter unit, and a memory unit connected to the processing unit. In a further aspect, the present invention relates to a traffic information system.

### Background art

Electronic license plates as such are known. For example, electronic license plates for conveying visual information are described in U.S. patent publication US 5,105,179. The device is an electronic replacement for the existing metal plate but does not transmit or receive electromagnetic information to support vehicle tracking.

U.S. patent publication US 4,001,822 describes a vehicle communication system in which a unitary electronic license plate having a plurality of layers responds to an impinging interrogation or probing signal of a given frequency and transmits this coded information back to receiver electronics in the interrogation device. According to this disclosure the ability within the electronic license plate is provided to detect coded information from the transmitter or interrogation device. The electronic license plate is capable of receiving coded information through the interrogation signal, making it a bi-directional communication system.

U.S. patent publication US 5,608,391 describes a two-piece electronic license plate architecture whereby the identification components are located in the license plate, and signal processing and communication electronics are located in a separate module, preferably a license plate holder. Additional security enhancements to this license plate are described in U.S. patent publication US 5,657,008.

U.S. patent publication US 6,025,784 describes various methods of forming license plate frames and integrating RFID transponders into these assemblies.

US patent publication US 2002/0101332 describes an RF license plate, which, like the prior art license plates described above, requires the use of an interrogation device to energize or activate the license plate to respond by transmitting its radio frequency modulated signal.

### Summary of the invention

The present invention seeks to provide an improved smart license plate, which can be effectively and efficiently used in the traffic information system.

According to the present invention, a smart license plate as defined above is provided, in which the processing unit is arranged to compose a transmission message comprising vehicle related information stored in the memory unit, and to transmit the transmission message via the RF transmitter unit in an asynchronous manner. As the smart license plate is only able to transmit a message, and in an asynchronous version, the implementation can be much simpler than prior art interrogation based systems, yet problems e.g. associated with data collision are effectively prevented.

In a further aspect of the present invention, a traffic information system is provided comprising a plurality of receivers, each of the plurality of receivers being arranged to receive transmissions from a smart license plate according to any one of the embodiments described herein, when within receiving range of a respective one of the plurality of receivers.

The general advantage of the present invention is to provide an integrated system for tracking (motor) vehicles. To attain this the present invention embodiments in summary relate to a tamper-proof, electronic vehicular smart license plate having all electronic components integrated therein, roadside and mobile receivers for detecting vehicles and decoding an RF transmission originating from the smart license plate, and to an information system for making the data useful to law enforcement, industry, and private citizens.

### Short description of drawings

The present invention will be discussed in more detail below, with reference to the attached drawings, in which
Fig. 1 shows a schematic presentation of a vehicle tracking and information system employing a smart license plate according to the present invention embodiments;
Fig. 2 shows a block diagram of a smart license plate according to an embodiment of the present invention; and
Fig. 3 shows a back view of a further embodiment of the present invention smart license plate.

### Description of embodiments

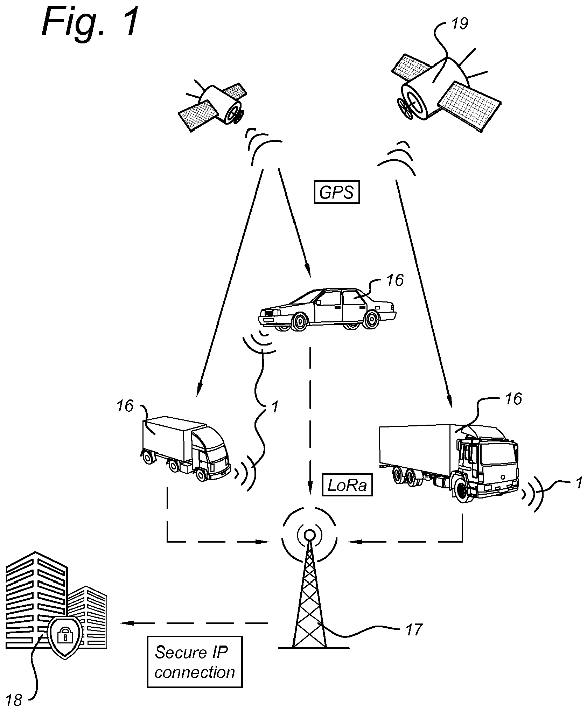

In this description, various embodiments are described as examples of implementation embodiments of the present invention. In Fig. 1 a schematic presentation is shown of an example of a traffic information system 15, co-operating with a plurality of smart license plates 1 according to any one of the embodiments described herein. A number of vehicles 16 can be monitored by the traffic information system 15, using a plurality of receivers 17 which are in communication with a central data processing system 18. The vehicles 16 may be equipped with positioning systems, e.g. based on GPS or another satellite based positioning system, in general indicated by the GPS satellites 19 in Fig. 1.

In one aspect of the present invention, a traffic information system 15 is provided comprising a plurality of receivers 17, each of the plurality of receivers 17 being arranged to receive transmissions from a smart license plate 1 according to any one of the embodiments described herein, when within receiving range of a respective one of the plurality of receivers 17.

In the exemplary embodiment shown in Fig. 1, the traffic information system 15 comprises a tamper-proof, electronic vehicular smart license plate 1 having all electronic components integrated therein, roadside or mobile receivers 17 for detecting vehicles 16 and decoding the RF transmission emitted by each of the smart license plates 1, and an information architecture in the form of central data processing system 18 for making the data useful to law enforcement, industry, and private citizens. Each vehicle 16 will be equipped with a microchip enhanced smart license plate 1 which stores a unique vehicle identification code and/or vehicle registration number. The imbedded microchip will continuously or intermittently broadcast information including vehicle identification code, current GPS location and vehicle speed to a nearby receiver 17 or gateway. In case the vehicle is out of range of receiver 17 coverage, information will be stored on embedded memory chip, the stored information will be podcasted as soon as the vehicle 16 enters the receiving range of the receiver 17. When the vehicle information code is received by the next nearby receiver 17, the information is forwarded via a wireless communication link or wide area network to the central data processing system 18 (e.g. used by Road and Transport Authority). The receivers 17 may in general be separated from each other by a distance of even a few miles apart (e.g. in the range of 2-10 miles). In a further embodiment of the traffic information system 15, the receiver 17 is arranged to uplink stored records periodically to a Central Information System (CIS) implementation of the central data processing system 18 by means of a communication link. The CIS is e.g. a data bank with all information related vehicle records.

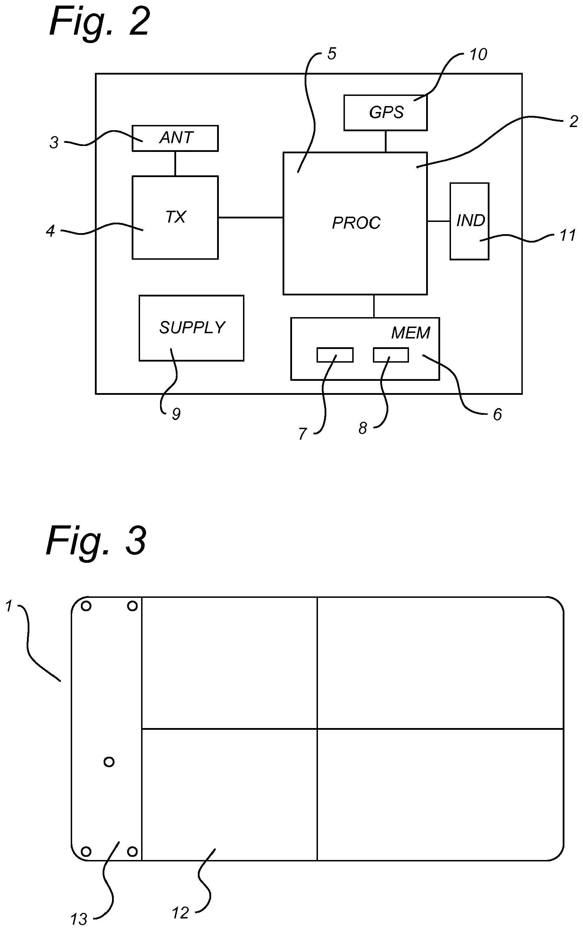

Fig. 2 shows a schematic block diagram of an embodiment of an electronics unit 2 of a smart license plate 1 according to an exemplary embodiment of the present invention. The electronics unit 2 comprises an antenna 3, an RF transmitter unit 4 connected to the antenna 3, a processing unit 5 connected to the RF transmitter unit 4, and a memory unit 6 connected to the processing unit 5. The processing unit 5 is arranged to compose a transmission message comprising vehicle related information stored in the memory unit 6, and to transmit the transmission message via the RF transmitter unit 4 in an asynchronous manner.

In addition, as shown in the exemplary embodiment of Fig. 2, the electronics unit 2 may comprise further components, such as an energy supply unit 9. The energy supply unit 9 may comprise a (lithium) battery or similar energy storage component, connected to a supply source, e.g. a solar, kinetic or thermal energy source.

Furthermore, the electronics unit 2 may comprise a positioning unit 10 connected to the processing unit 5, wherein the processing unit 5 is arranged to store data from the positioning unit 10 in the memory unit 6. The data may be (raw) position data, but also a trajectory of the vehicle, i.e. a sequence of positioning data over (a period of) time.

As indicated in the schematic block diagram of Fig. 2, the electronics unit 2 may further comprise a visual indicator unit 11 connected to the processing unit 5. This visual indicator unit 11 may provide an indication of status of the smart license plate 1, e.g. signalling proper functioning, or a tamper proof indication, etc. For this, the visual indicator unit 11 is e.g. arranged to provide optical signals, which can convey status and security information associated with the smart license plate 1.

The smart license plate 1 includes the processing unit 5, allowing implementation of smart functions. E.g. the processing unit is further arranged to include in the transmission message one or more of: a license plate identification, a vehicle identification, vehicle speed, positioning data.

In the present invention embodiments, as opposed to prior art interrogation based devices, the present invention embodiments relate to active, asynchronously transmitting devices which randomly transmit a coded ID signal at intervals. I.e. the asynchronous manner is a periodic transmission of the transmission message. The periodic transmission has an interval period of between 0.5 and 4 seconds in a further embodiment. There is no interrogating device needed in the present invention embodiments. There is only the receiver 17, and the active, smart license plate 1 which randomly broadcasts vehicle identity. The asynchronous transmission provides inherent RF collision avoidance. By using an actively transmitting smart license plate 1, which randomly transmits its ID codes, multiple vehicles within range of a receiver 17 can be serviced, and their data read. The present invention embodiments furthermore are unidirectional only, electromagnetically transmitting coded digital information, and also visually conveying compliance information as defined herein.

In a further embodiment, the memory unit 6 comprises a first ROM unit 7 and a second ROM unit 8, wherein the first ROM unit 7 is arranged for storing a license plate identification associated with the smart license plate 1, and the second ROM 8 unit is arranged for storing a vehicle identification. The memory unit 6 circuits provide a unique plate identity to the smart license plate 1. One chip (e.g. first ROM unit 7) is programmed with the license plate number at the time of manufacture. A second chip (e.g. second ROM unit 8) is reserved for the vehicle ID number and is e.g. programmed by the Department of Motor Vehicles when the smart license plate 1 is issued. The memory unit 6 may further comprise an EPROM unit (not shown) which is e.g. used by law enforcement for programming status illumination. This can be achieved by the visual indicator unit 11, which is e.g. arranged to provide optical signals, which can convey status and security information associated with the smart license plate 1.

The RF transmitter unit 4 is e.g. a LoRa transmitter unit. Alternative implementations could e.g. be Bluetooth, BLE, SIGfox, Wifi, or other Internet of Things data communication protocols. LoRa provides a sufficiently large transmission/reception range between a smart license plate 1 and one of the receivers 17 to be able to operate the traffic information system 15 with a sufficiently low number of receivers 17. Also, LoRa provides for an efficient coding scheme allowing to efficiently transmit the message with data associated with the smart license plate 1, as described herein.

In a further embodiment, components of the electronics unit are embedded in the smart license plate. In an exemplary embodiment, the components are encapsulated, e.g. mounted on a (dielectric) substrate and encapsulated.

The smart license plate 1 according to an embodiment of the present invention is of unitary construction. Electronic components embedded into an example of the smart license plate 1 include the antenna 3, the Lora RF transmitter 4, multiple one-time programmable (ROM) memory circuits 6-8, an erasable programmable read-only memory (EPROM), a CPU 5, a clock circuit, GPS sensor 10, security electronics and a (solar/thermal/kinetic) battery 9. All electronics are mounted to a dielectric substrate and encapsulated. Alternatively, components are encased between front and rear (composite) panels 12, 13 of the smart license plate 1, as shown in Fig. 3. The front panel 12 and rear panel 13 are e.g. permanently joined together either by means of welding or a chemical bond. As shown in the exemplary embodiment in Fig. 3, the smart license plate 1 has a front panel 12, and a (small) rear panel 13 covering a space formed in the front panel 12 where the electronic components are accommodated.

Furthermore, in an even further embodiment, the smart license plate 1 comprises an RFID unit, which can be monitored from within the vehicle 16. If e.g. the smart license plate 1 would fall off the vehicle 16, or is taken away from the vehicle 16, this can be detected and a suitable alarm can be triggered.

In a further embodiment, the smart license plate comprises a license plate of conductive material, and the antenna 3 is formed as a part of the license plate. E.g. the antenna 3 may be formed by (a part of) the front panel 12 if this is made from a suitable (conductive) material.

With the present invention embodiments, it is possible to provide an integrated system for tracking motor vehicles. An exemplary present invention embodiment comprises a tamper-proof, electronic vehicular license plate 1 having all electronic components integrated therein, roadside and mobile receivers 17 for detecting vehicles 16 and decoding the Lora RF transmission, and an information system 18 for making the data useful to law enforcement, industry, and private citizens.

A possible application of the present invention embodiments is to provide a tool for supporting crime scene investigations. Recognizing that virtually all crimes involve, or are supported by vehicular transportation, this tracking and information system 15 will provide a tool for focusing investigative efforts at crime scenes. For example, by correlating the time at which a crime is committed to a database of vehicles 16 driving in that particular area, police can significantly speed up the investigation. Also, if police are searching for a specific vehicle this identification and tracking system 15 will report where the vehicle was last 'read' by one of the receivers 17. As the coded message transmitted by the smart license plate 1 can e.g. include vehicle speed, location, registration expiry, etc. the tracking system 15 can be employed for various policing tasks.

A further application area may be to improve toll-booth efficiency. While "One-Pass" and other RFID systems currently demonstrate the technology, a vast majority of drivers continue to pay by cash resulting in delays for everyone. This vehicle identification system implementation of the traffic information system 15 would provide a universal platform for automatic toll invoicing, and other toll road applications.

Another application area of the present invention is to facilitate traffic studies for community planning. Using this traffic information system 15, the specific demographics of vehicular traffic can be evaluated to more accurately assess traffic patterns.

Further applications and advantageous use of the present invention embodiments may relate to enhanced public safety/homeland security by allowing authorities to track movement of vehicles and identify criminals; capturing vehicle speed according to the limit on a particular road, and issue fines in case of speed violation which could help to improve driver's behavior when it comes to speed, improve safety on particularly on internal roads, reduce accidents, better way of traffic fines collection; smart parking, allowing auto deduction of parking fees, while it can also ease entry to and exit from parking areas, without the need to swipe cards, and/or allowing to inform a motorist whether there is any vacant slot in a parking area; fewer travel delays due to a universal platform for toll-booth automation; enable smart roads; aiding road side assistance; and improves road traffic flow by automatically identify crowded road and suggest alternative routes.

In brief, the subject invention embodiments relate to a tamper-proof, electronic vehicular smart license plate 1 having all electronic components integrated therein, roadside or mobile receivers 17 for detecting vehicles and decoding the transmission, and an information architecture for making the data useful to law enforcement, industry, and private citizens.

The present invention has been described above with reference to a number of exemplary embodiments as shown in the drawings. Modifications and alternative implementations of some parts or elements are possible, and are included in the scope of protection as defined in the appended claims.

## Claims

1. A smart license plate, comprising an electronics unit (2),
the electronics unit (2) comprising an antenna (3), an RF transmitter unit (4) connected to the antenna (3), a processing unit (5) connected to the RF transmitter unit (4), and a memory unit (6) connected to the processing unit (5),
the processing unit (5) being arranged to compose a transmission message comprising vehicle related information stored in the memory unit (6), and to transmit the transmission message via the RF transmitter unit (4) in an asynchronous manner.

2. The smart license plate according to claim 1, wherein the asynchronous manner is a periodic transmission of the transmission message.

3. The smart license plate according to claim 2, wherein the periodic transmission has an interval period of between 0.5 and 4 seconds.

4. The smart license plate according to claim 1, 2 or 3, wherein the memory unit (6) comprises a first ROM unit (7) and a second ROM unit (8), wherein the first ROM unit (7) is arranged for storing a license plate identification associated with the smart license plate (1), and the second ROM unit (8) is arranged for storing a vehicle identification.

5. The smart license plate according to any one of claims 1-4, further comprising an energy supply unit (9).

6. The smart license plate according to any one of claims 1-5, further comprising a positioning unit (10) connected to the processing unit (5), wherein the processing unit (5) is arranged to store data from the positioning unit (10) in the memory unit (6).

7. The smart license plate according to any one of claims 1-6, wherein the processing unit (5) is further arranged to include in the transmission message one or more of: a license plate identification, a vehicle identification, vehicle speed, positioning data.

8. The smart license plate according to any one of claims 1-7, further comprising a visual indicator unit (11) connected to the processing unit (5).

9. The smart license plate according to any one of claims 1-8, wherein the RF transmitter unit (4) is a LoRa transmitter unit.

10. The smart license plate according to any one of claims 1-9, wherein components of the electronics unit (2) are embedded in the smart license plate (1).

11. The smart license plate according to claim 10, wherein the components are encapsulated.

12. The smart license plate according to claim 10, wherein the components are encased between rear and front panels (12, 13) of the smart license plate (1).

13. The smart license plate according to any one of claims 1-12, further comprising an RFID unit.

14. The smart license plate according to any one of claims 1-13, wherein the smart license plate (1) comprises a license plate of conductive material, and the antenna (3) is formed as a part of the license plate (1).

15. Traffic information system comprising a plurality of receivers (17),
each of the plurality of receivers (17) being arranged to receive transmissions from a smart license plate (1) according to any one of claims 1-14 when within receiving range of a respective one of the plurality of receivers (17).
